# EUROPEAN PATENT SPECIFICATION

(11) **EP 3 007 408 B1**
(45) Date of publication and mention of the grant of the patent: **26.04.2017**
(21) Application number: 15171032.4
(22) Date of filing: 08.06.2015
(51) Int. Cl.: H04L 12/911, H04L 29/08

(54) **SERVICE METHOD FOR MANAGING TRANSACTIONS USING APPLICATION PROPERTIES AND SYSTEM THEREFOR**
DIENSTVERFAHREN ZUR VERWALTUNG VON TRANSAKTIONEN MITHILFE VON ANWENDUNGSEIGENSCHAFTEN UND SYSTEM DAFÜR
PROCÉDÉ DE SERVICE POUR GÉRER DES TRANSACTIONS À L'AIDE DES PROPRIÉTÉS D'UNE APPLICATION ET SYSTÈME ASSOCIÉ

(30) Priority: 08.10.2014 KR 20140135839
(43) Date of publication of application: 13.04.2016
(73) Proprietor: Korea Advanced Institute of Science and Technology, Daejeon 305-701 (KR)
(72) Inventor: Choi, Jun Kyun, 305-701 Daejeon (KR); Yang, Jin Hong, 305-732 Daejeon (KR); Park, Hyo Jin, 305-701 Daejeon (KR); Kim, Yong Rok, 305-701 Daejeon (KR); Jeon, Kyu Yeong, 305-732 Daejeon (KR)
(74) Representative: Gill Jennings & Every LLP

(56) References cited:
- US-A1- 2014 289 366
- GEOFFREY C FOX ET AL: "Architecture and measured characteristics of a cloud based internet of things", COLLABORATION TECHNOLOGIES AND SYSTEMS (CTS), 2012 INTERNATIONAL CONFERENCE ON, IEEE, 21 May 2012 (2012-05-21), pages 6-12, XP032216183, DOI: 10.1109/CTS.2012.6261020 ISBN: 978-1-4673-1381-0
- KRINTZ CHANDRA ET AL: "Cloud Platform Support for API Governance", 2014 IEEE INTERNATIONAL CONFERENCE ON CLOUD ENGINEERING, IEEE, 11 March 2014 (2014-03-11), pages 615-618, XP032647707, DOI: 10.1109/IC2E.2014.90
- WU MENG-YU ET AL: "Design and implementation of cloud API access control based on OAuth", IEEE 2013 TENCON - SPRING, IEEE, 17 April 2013 (2013-04-17), pages 485-489, XP032478317, DOI: 10.1109/TENCONSPRING.2013.6584492 ISBN: 978-1-4673-6347-1 [retrieved on 2013-08-21]

## Description

### BACKGROUND

Embodiments of the inventive concepts described herein relate to a service method for managing a transaction using application properties and a system therefor.

Internet of things (IoT) has been evolved from an existing ubiquitous sensor network (USN) or machine to machine (M2M) communication. While the existing M2M communication has primarily aimed at communication between communication equipment (e.g., an end device) and a person, loT has enabled communication between a thing, which is generally visible to users, such as a telephone, a book, and a thermometer, and a person by expanding the scope of things. For example, loT may indicate a machine-and-space connecting network in which three distributed environmental elements, such as a person, a thing, and a service, cooperatively establish intelligent relationships, such as sensing, networking, and information processing, without explicit intervention of the person.

In addition to such loT, a variety of concepts and techniques such as Web of Things (WoT) or Web of Objects (WoO) have been studied and developed. With the development and distribution of the concepts and the techniques, use of devices (e.g., gadget devices, sensor devices, actuators, and the like) via which users may easily connect to the Internet, will increase.

In particular, recently, web linkage gadget devices have been released to the market in various types. Many sensor devices provide a control and monitoring function via the web. Also, terminals for providing a control function via the web may be embedded with a web server function or may include a function which may be controlled via an online web service.

However, the aforementioned techniques, devices, and services are individually managed. Therefore, this results in an inconvenience to users. For example, even though there are a plurality of devices around a user, he or she may need to control each device via an individual access path (e.g., a universal resource locator (URL)). When a device autonomously provides a web access function (e.g., a server function), there is a need for network linkage and a URL (e.g., an Internet protocol (IP) address) for accessing an individual device. When a service is provided via an exclusive web service, there is a need for generating access authority for each service and there is a need for a URL for each service.

Also, data individually managed may not be readily used via an organic linkage. For example, in case of a sensor for controlling a boiler installed in a house, a sensor device may directly gather only limited ambient environment information such as a presence of a person residing in the house, an inside temperature, and a time zone. If the sensor device may additionally use external information (e.g., an outside temperature and schedule information of a user, and the like), a more effective control function may be provided. However, due to data individually managed for each technique, device, or service, it is difficult to organically link and use the data.

Also, an loT device of an loT environment and a service connected with this loT device may connect to each other in a form of 1 :N as well as 1:1. As such, when the loT device and the service connect to each other in the form of 1 :N, data consumption of the loT device is reduced and there is a need for managing transactions on the entire system by effectively aggregating and distributing data of the loT device, according to information of associated services in view of aggregating data of the loT device. For example, most loT devices are linked with an external service through a cloud service. In this case, as the number of external services linked with an loT device is increased, a communication request for the loT device is more increased. The increase of this communication request leads to increase of battery consumption of the loT device and increase of transactions of the entire system.

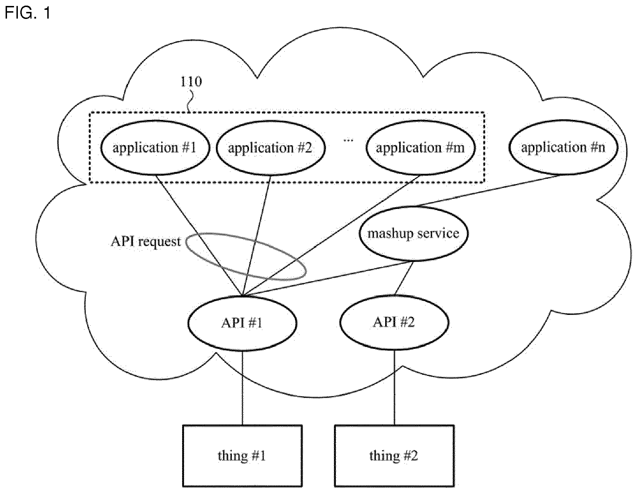

FIG. 1 is a drawing illustrating a communication environment between an loT device and a service according to the related art. Applications (e.g., an application #1 to an application #m and an application #n) shown in FIG. 1 may be components for providing a service through communication with things (e.g., a thing #1 and a thing #2).

For example, applications (e.g., the application #1 to the application #m) included in a first dotted box 110 may be services connected with the thing #1 in the form of 1 :N. The thing #1 may be a temperature sensor which provides temperature information in a house every 10 seconds. This temperature information may be stored in a database through a virtual object (VO) corresponding to the thing #1. The application #1 may provide a service which controls an air conditioner when there is a change in the read temperature information and reads temperature information of the thing #1 every three seconds. The application #2 may provide a service which reads a value through a VO corresponding to the thing #1 every five seconds and outputs a comparison value of comparing the read value with a temperature outside a house.

In other words, since developers who develop a high-level application/service progress development of a needed service, irrespective of an operation of an loT device, there are a plurality of inefficient transactions between an application/service and an loT device. In other words, in the related art, sudden increase of unnecessary communication according to a state of an loT device results in increase of battery consumption and sudden increase of unnecessary cloud-based transactions.

GEOFFREY C FOX ET AL: "Architecture and measured characteristics of a cloud based internet of things", COLLABORATION TECHNOLOGIES AND SYSTEMS (CTS), 2012 INTERNATIONAL CONFERENCE ON, IEEE, 21 May 2012 (2012-05-21), pages 6-12, XP032216183, DOI: 10.1109/CTS.2012.6261020 ISBN: 978-1-4673-1381-0 discloses background art.

### SUMMARY

Embodiments of the inventive concepts provide a service method for providing a more efficient service by managing entire communication information to an loT device in view of a cloud service and a system therefore.
According to a first aspect of the invention there is a service system as set out in claim 1.

### BRIEF DESCRIPTION OF THE FIGURES

The above and other objects and features will become apparent from the following description with reference to the following figures, wherein like reference numerals refer to like parts throughout the various figures unless otherwise specified, and wherein
FIG. 1 is a drawing illustrating a communication environment between an loT device and a service according to the related art;
FIG. 2 is a drawing illustrating a communication environment between an loT device and a service according to an exemplary embodiment of the inventive concept;
FIG. 3 is a block diagram illustrating a configuration of an entire system for instance hosting according to an exemplary embodiment of the inventive concept;
FIG. 4 is a drawing illustrating the concept of interfaces of an instance according to an exemplary embodiment of the inventive concept;
FIG. 5 is a drawing illustrating functions for interfaces of an instance according to an exemplary embodiment of the inventive concept;
FIG. 6 is a drawing illustrating an instance list page according to an exemplary embodiment of the inventive concept;
FIG. 7 is a flowchart illustrating a process of installing a service and/or application according to an exemplary embodiment of the inventive concept;
FIG. 8 is a flowchart illustrating a communication process according to an exemplary embodiment of the inventive concept; and
FIG. 9 is a block diagram illustrating a configuration of a service system according to an exemplary embodiment of the inventive concept.

### DETAILED DESCRIPTION

Embodiments will be described in detail with reference to the accompanying drawings. The inventive concept, however, may be embodied in various different forms, and should not be construed as being limited only to the illustrated embodiments. Rather, these embodiments are provided as examples so that this disclosure will be thorough and complete, and will fully convey the concept of the inventive concept to those skilled in the art. Accordingly, known processes, elements, and techniques are not described with respect to some of the embodiments of the inventive concept. Unless otherwise noted, like reference numerals denote like elements throughout the attached drawings and written description, and thus descriptions will not be repeated. In the drawings, the sizes and relative sizes of layers and regions may be exaggerated for clarity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the inventive concept.

Spatially relative terms, such as "beneath", "below", "lower", "under", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" or "under" other elements or features would then be oriented "above" the other elements or features. Thus, the exemplary terms "below" and "under" can encompass both an orientation of above and below. The device may be otherwise oriented (rotated 90 degrees or at other orientations) and the spatially relative descriptors used herein interpreted accordingly. In addition, it will also be understood that when a layer is referred to as being "between" two layers, it can be the only layer between the two layers, or one or more intervening layers may also be present.

The terminology used herein is for the purpose of describing particular embodiments only and is not intended to be limiting of the inventive concept. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Also, the term "exemplary" is intended to refer to an example or illustration.

It will be understood that when an element or layer is referred to as being "on", "connected to", "coupled to", or "adjacent to" another element or layer, it can be directly on, connected, coupled, or adjacent to the other element or layer, or intervening elements or layers may be present. In contrast, when an element is referred to as being "directly on," "directly connected to", "directly coupled to", or "immediately adjacent to" another element or layer, there are no intervening elements or layers present.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

Hereinafter, a description will be given in detail for exemplary embodiments of the inventive concept with reference to the accompanying drawings.

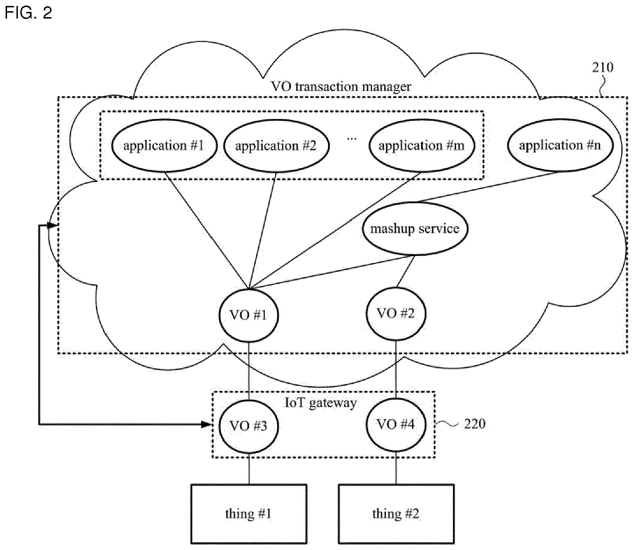

FIG. 2 is a drawing illustrating a communication environment between an loT device and a service according to an exemplary embodiment of the inventive concept.

A cloud-based virtual object (VO) transaction manager 210 is represented by a first dotted box. When a high-level service or application (e.g., an application #1 to an application #m or an application #n) is deployed on a cloud service, the VO transaction manager 210 may obtain call period information (e.g., call period information for obtaining data of a thing #1 or a thing 2) by analyzing a corresponding service logic. Therefore, a VO (e.g., a VO #1 and a VO #2) of an loT device (e.g., the thing #1 and the thing #2) may meet demands of the upper-level service or application using the minimum number of VO calls.

In this case, a VO (e.g., the VO #1 and the VO #2) of the VO transaction manager 210 may analyze application program interface (API) request information of several high-level services and applications and may provide an optimum communication function with the loT device.

An loT gateway 220 is represented by a second dotted box. A VO (e.g., a VO #3 and a VO #4) on the loT gateway 220 may control transactions to reduce a transaction cost with a cloud service.

The high-level service or application may include API information to be called on a cloud service.

Hereinafter, a description will be given in more detail for the cloud-based VO transaction manager 210.

When a VO of an loT device is generated, the VO transaction manager 210 may register a data interface, provided from the VO, as an API format in a cloud service. For example, when registering a VO, the VO transaction manager 210 may describe a data generation period and type of a corresponding loT device on a profile of the VO. Herein, the data generation period may be described in a unit of second, and the type may be classified as a periodic type or a non-periodic type. The periodic type may indicate that a corresponding loT device periodically generates data. The non-periodic type may indicate that the corresponding loT device non-periodically generates data.

In view of service and/or application development, when a value of a data interface provided from a corresponding VO through another service and/or another application is updated, an API may be called as a callback type.

Also, the VO transaction manager 210 may provide a function for managing an loT device. For example, the VO transaction manager 210 may provide a function for monitoring transactions per loT device. For a more detailed example, the VO transaction manager 210 may monitor the number of times transactions are generated. The VO transaction manager 210 may classify the number of times transactions are generated into the number of times transactions are generated by an IoT device and the number of times transactions are generated according a request of a service and/or an application and may monitor the classified number of times the transaction are generated. The classified number of times the transaction are generated may be used as information for differential billing according to provision of a service later. Also, the VO transaction manager 210 may monitor a transaction of an loT device according to each external API.

Also, the VO transaction manager 210 may manage use permission per API. For example, the VO transaction manager 210 may provide an API management function per VO of an loT device registered on a cloud service. In this case, the VO transaction manager 210 may manage permission information of an API, which may be used through a corresponding process according to each process (service and/or application). The managed information may include at least one of call permission per API, the number of times of calls per API, or the maximum number of times an API may be called per minute.

A VO may have the following demands for using a function of this VO transaction manager 210.

First of all, a VO may refer to virtual profile information corresponding to an loT device and may have an individual interface according to a data type about data generated by an individual loT device. For example, a VO may have an individual interface according to the number of information generated by an loT device and the number of information for controlling the loT device. An individual transaction may be monitored through the individual interface of the VO.

The individual interface of the VO may include information about an interface type, information about an interface identifier (ID), and information about an interface communication period.

For example, the individual interface may be an element for being linked with the VO transaction manager 210 and may include information about interface types such as a feeder and a receiver. The feeder may be an interface of a VO for providing information from an loT device, and the receiver may be an interface of a VO called from an external service.

The interface ID included in the VO may refer to a unique ID of an interface, and the interface communication period may refer to a transaction period of a corresponding interface. The interface communication period may include two elements such as a type and a period. The type may indicate whether to use any of a static value and a dynamic value. The period may refer to a call time. When a dynamic value is used, the period may refer to a minimum period. A non-periodic type may indicate the maximum number of times transactions are processed.

Hereinafter, a description will be given in detail for a deployment process of a service and/or application and demands of a cloud-based service for using the VO transaction manager 210.

To call an API registered in the VO transaction manager 210, information associated with the call may be included in advance. For this, when a service and/or application is deployed, the VO transaction manager 210 may store information for API call permission, information about an API call type, and information about an API call period.

The information about the API call permission may be information for providing ratings provided from a service system, and call permission may be set according to a service and a service level agreement (SLA).

The API call type may be classified as a 'callback' or a 'call'. The 'callback' may be a function of requesting a call when a value of a corresponding interface is changed. When a value of a corresponding interface is changed, the 'call' may be a function of immediately requesting the value of the interface.

The API call period may be information for setting a period in which an API may be called and may be set in a unit of second.

In other words, a cloud-based service and/or application may be developed using various languages such as Java, Python, personal hypertext preprocessor (PHP), and JavaScript. Therefore, a service developed using a specific language needs to be deployed to include information associated with an API call according to each individual process. When the service is deployed, this information associated with the API call may be provided to the VO transaction manager 210.

The above-described VO transaction manager 210 according to an exemplary embodiment of the inventive concept may be included in an instance hosting platform which will be described below.

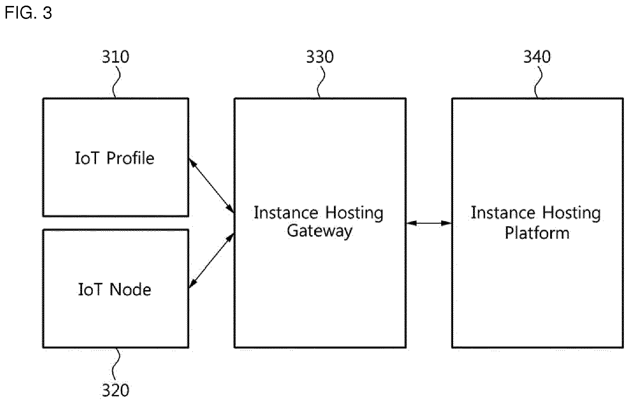

FIG. 3 is a block diagram illustrating a configuration of an entire system for instance hosting according to an exemplary embodiment of the inventive concept. FIG. 3 illustrates an Internet of Things (IoT) profile 310, an loT node 320, an instance hosting gateway 330, and an instance hosting platform 440.

The loT profile 310 may refer to information on the loT node 320 which is provided online from a manufacturer or a developer of the loT node 320 which is an loT device. For example, this loT profile 310 may refer to an extensible markup language (XML) file which is generated when the manufacturer or the developer processes information on the loT node 320 according to a predefined XML scheme to minimize inconvenience in which a user has to manually input data to the instance hosting gateway 330.

This loT profile 310 may include a description about the loT node 320 and an identifier (ID) (e.g., a uniform resource locator (URL) of a document including information on a process) of a process in which an operation of the loT node 320 is described. For example, a process may be provided online using a separate file (e.g., extension 'js' file) and an ID about the process may be a URL indicating a location of this file. The following Table 1 shows an example of information which may be included in the loT profile 310.

**[Table 1]**

| Name | Description | Note |
|---|---|---|
| IoTProfileID | A unique URL in which an loT profile is located | |
| IoTProfileVer | A version of an loT profile | Expressed in a form of 'V' + 'number' |
| IoTProfileDesc | A description of an loT profile | |
| IoTInput | An input value of an loT node (not required for an instance node which does not provide an input function), and information used to generate RESTful API | JSON-XML |
| IoTOutput | An output value of an loT node and information used to generate RESTFUL API | |
| IoTProcessID | A process ID of an loT node | Expressed in a URI format |

The loT node 320 may correspond to a thing in an loT environment, such as a sensor device, and may provide ID information of the loT node 320, such as 'IoTNodeID'. When the loT node 320 is a non-constraint (NC) node such as a smart device, it may directly provide the loT profile 310.

For clarity of description, FIG. 3 illustrates the single loT node 320 and the single loT profile 310 about the loT node 320. However, a plurality of loT nodes and a plurality of loT profiles about the plurality of loT nodes may be used in an loT environment. Also, a plurality of loT profiles may be provided with respect to a single loT node.

A single loT node and an instance corresponding to a virtual object (VO) may be provided in various forms, such as 1:1, 1:N, N:1, and N:M. Also, an instance may correspond to a VO which may exist in a form of a process regardless of an absence of a physical loT node, and may be generated and linked through linkage between processes, instead of being linked to a specific device such as a mashup process. For example, even though an instance is not connected to a separate loT node, an instance may be generated in the instance hosting gateway 330 by deploying and executing a specific process in the instance hosting gateway 330. In the present specification, there is described an exemplary embodiment of the inventive concept in which a message received an loT node through communication between the loT node (e.g., a physical node) described as a physical device and the instance hosting gateway according to exemplary embodiments of the inventive concept is connected and processed with an individual instance. However, as described above, at least one loT node may be present in a form of a process (e.g., a process node), rather than a physical device.

Further, a process of receiving information from a plurality of sensors without a physical device, such as a sensor device or an actuator, and providing only a linkage function with another web service or application online may be provided. For example, in case of a service which provides a specific result by analyzing information of sensors or state information of a specific application used by a social service or a user, there is a need for a separate processing environment to operate the corresponding service. In this case, an instance hosting gateway according to exemplary embodiments of the inventive concept may provide the processing environment.

The instance hosting gateway 330 may correspond to an loT gateway described in FIG. 2, may process a message received from the loT node 320 by connecting the message with an individual instance, and may interact with an external service according to a request of a user or a service. This instance hosting gateway 330 may be mounted on an access point (AP) environment for the loT node 320. For example, the instance hosting gateway 330 may include an instance application server portion which is mounted on an AP and operates as a web application server (WAS) and a portion which is mounted on an AP in a form of software, hardware, or a combination of software and hardware (e.g., a module mounted with software on an operating system (OS) of the AP and a module mounted with hardware for communication with the loT node 320).

For example, the instance hosting gateway 330 may be included in an AP installed in a specific space (e.g., a house), and may perform a function for communicating with things (e.g., loT nodes) included in the specific space, receiving and processing data, and providing a linkage service with an external service.

In this case, when the new loT node 320 is found, the instance hosting gateway 330 may download and install the loT profile 310. For example, a user may input a location of an XML file corresponding to the loT profile 310 to the instance hosting gateway 330, and the instance hosting gateway 330 may download and install the XML file according to the input location.

The instance hosting platform 340 may provide a linkage function between instances and a mashup function. For example, the instance hosting gateway 330 may provide a function to be provided according to a request of a user or a service to the outside in an API format and may communicate with the instance hosting platform 340 to interact with an external service.

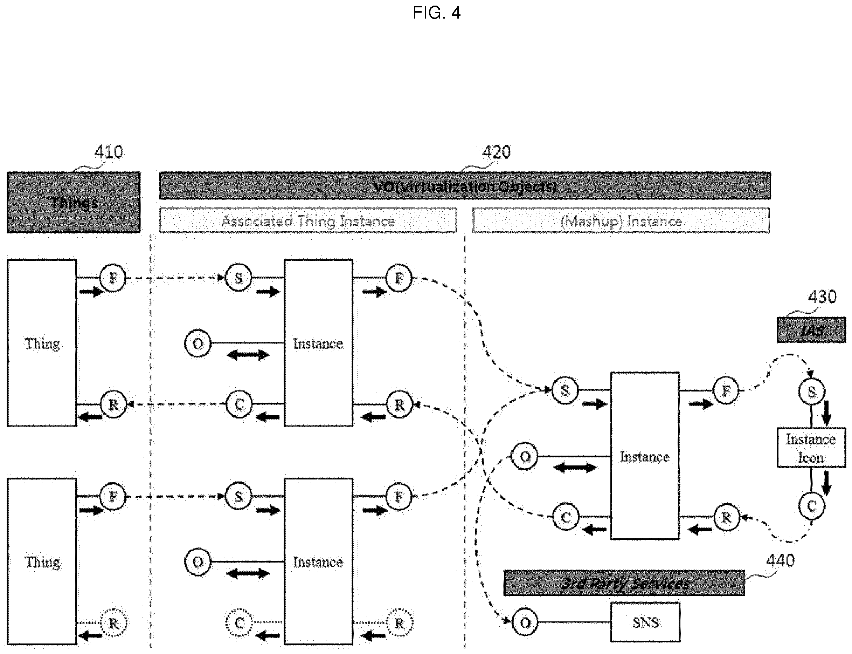

FIG. 4 is a drawing illustrating the concept of interfaces of an instance according to an exemplary embodiment of the inventive concept. In virtualization objects 420 of things 410, there is a need for a basic interface necessary for connection between a virtualization object and a thing and for connection between a virtualization object and another virtualization object. In an exemplary embodiment of the inventive concept, a description will be given of examples of providing a total of 5 interface functions for instance to effectively and explicitly use an interface.

Information of an individual instance may be explicitly described in an instance profile according to each instance to be used. An instance manager which may be included in an instance hosting gateway 330 of FIG. 3 may provide an associated function according to information of a corresponding instance. In this case, FIG. 4 illustrates each of the things 410, associated thing instances, and a mashup instance for linkage between instances. In this case, the mashup instance may facilitate linkage between an instance application server (IAS) 430 and a 3^{rd} party service 440.

The IAS 430 may be responsible for a web application server function of the instance hosting gateway 330. In this case, functions provided through the IAS 430 may be provided to a web interface. Also, the 3^{rd} party service 440 may refer to various external services (e.g., an external service 130 of FIG. 1) such as social network services (SNSs) associated with users.

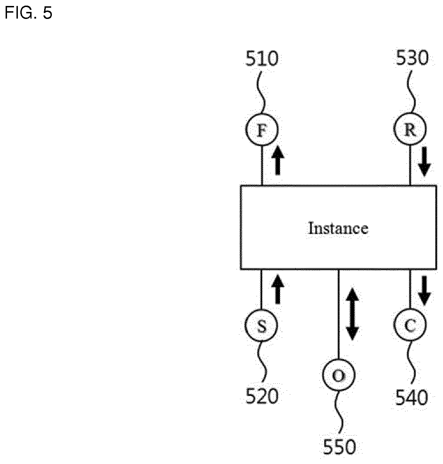

FIG. 5 is a drawing illustrating functions for interfaces of an instance according to an exemplary embodiment of the inventive concept. Instances which are virtualization objects 420 of FIG. 4 may transmit and receive data between (1) a thing and an instance, between (2) an instance and an instance, between (3) an external service (e.g., a 3^{rd} party service 440) and an instance, between (4) an instance hosting application function (e.g., an instance icon of FIG. 4) and an instance, using 5 interfaces previously provided from an instance manager.

An F 510 denoting a feeder may include an interface which exposes information an instance wants to provide to an instance or an external service. In this case, the F 510 may operate in a way of storing information to be fed on a message queue of an instance, rather than directly transmitting a message. The F 510 may be used in the following cases (1) to (3).
The case (1) where a message received from a device (thing) is read and the read message is transmitted to another service or another instance.
The case (2) where a specific state value is exposed in an instance or a value to be transmitted to an external service (e.g., a 3^{rd} party service 440 of FIG. 4) is exposed.
The case (3) where a value (hereinafter, referred to as a representative attribute value) to be representatively exposed to users through an instance icon (e.g., an instance icon of an IAS 430 of FIG. 4) on an instance list among state values of instances is set.
   S 520 denoting a subscriber may include an interface which receives information from a feeder of a thing or another interface. The S 520 may be used in the following cases (4) and (5).
The case (4) where information received from a device (thing) is used to be transmitted (In this case, information about a physical interface of a thing, to which a network adaptor which is included in an instance hosting gateway 330 of FIG. 3 will listen, may be described in an associatedThingInformation element).
The case (5) where information about a feeder of another instance is subscribed to (e.g., a case where a value exposed to a feeder interface of another instance is used) - when information about a feeder of another instance is subscribed to, information may be subscribed to through an interface suitable for a condition defined in a filter.
   R 530 denoting a receiver may include an interface through which an instance receives a message from a controller of another interface. The R 530 may be used in the following cases (6) to (8).
The case (6) where information is received from another interface (e.g., a case where information is received from a controller interface of another instance).
The case (7) where a representative control value on an instance icon is received (e.g., a case where a representative attribute value is set on a feeder) (e.g., a case where direct control of a user is processed).
The case (8) where a message is received from an external service (e.g., the 3^{rd} party service 440) (e.g., a case where user state information of a calendar service is received).
   C 540 denoting a controller may include an interface though which an instance receives information from the outside. The C 540 may be used in the following cases (9) and (10).
The case (9) where a (control) message is transmitted to a device (thing) (e.g., a case where a message is transmitted to a device (thing) in which an associated thing information element is set).
The case (10) where a message is transmitted to another instance (e.g., a case where data are transmitted in a triggering manner, rather than a manner of inputting data to a receiver interface message queue of another instance).
   O 550 denoting an open standard for authorization (OAuth) may include an interface through which an instance interacts with a 3^{rd} party service. The O 550 may be used in cases (11) and (12).
The case (11) where a message is transmitted to a 3^{rd} party service (after OAuth authentication is achieved).
The case (12) where a 3^{rd} party service receives (inquires) a message.

Herein, the above-described cases (8) to (12) indicate that the message is received from the external service. The message from the external service may be received through a receiver and may also be received through the O 550 according to exemplary embodiments of the inventive concept.

An instance according to exemplary embodiments of the inventive concept may generate each message queue for individual interface information. A message queue per interface may store the predetermined number of message (e.g., 100 messages). Although a corresponding instance is abnormally ended (e.g., when a state of the instance is changed to an error state), when there is a stored message, the instance may use the stored message when the state of the instance is changed to a normal running state again. In this case, messages received when the instance is in the error state may be stored on a message queue of an individual interface (e.g., a subscriber interface or a receiver interface), irrespective of a state of the instance.

Hereinafter, a description is given in more detail for interfaces which are included in an instance.
1. As described above, the subscriber may be an interface through which an instance receives and subscribes to a message from a feeder interface of a thing or another instance. When a message is received from a thing, the corresponding subscriber needs to describe information of a physical interface, necessary for receiving the message, on a corresponding 'associatedThingInformation' element. Herein, the necessary information may include information for adapting a physical interface of a basic device. Also, when a message is received from another interface, the corresponding subscriber needs to describe information, about a feeder interface of another interface to be subscribed to, on a filter element. The information about the feeder interface may be described on a filter element by inputting information of an instance to be subscribed to in a process (e.g., registration using an instance wizard) of registering a corresponding instance. In this case, when a trigger attribute is set to 'true', if a value of a corresponding feeder is generated, an instance manager may immediately call a subscriber instance which subscribes to the instance. The corresponding operation may be performed irrespective of an 'InstanceRunningPeriod' value.
An attribute a subscriber may have may be expressed as the following example of Table 2 below.

**[Table 2]**

| |
|---|
| ```
 <xs:element name="subscriber"> <xs:complexType>
 <!- It is used as an identifier for identifying an interface (I/F) according to
 each interface. A digit may be used to a maximum of a three-digit number.
 →
 <xs:attribute name="id" type="xs:unsignedShort" />
 <!-NAME may be used as information for easily classifying I/Fs, and may
 be used as information provided to users to classify I/Fs of a corresponding
 instance upon connection between instances later. →
 <xs:attribute name="name" type="xsatring" />
 <!- When a corresponding value is generated upon subscribing to another
 instance, after immediately performing monitoring about whether to perform
 setting according to whether a response occurs and about whether an
 instance manager performs triggering setting of a feeder list, data are
 immediately transmitted →
 <xs:attribute name="trigger" type="xs:boolean" />
 </xs:complexType> </xs:element>
``` |

Also, an attribute a filter in a subscriber may have may be expresses as the following example of Table 3 below.

**[Table 3]**

| |
|---|
| ```
 <xs:element name="filter"> <xs:complexType>
 <!- When a feeder of another instance is subscribed to, only an interface
 suitable for a condition defined in a filter may be subscribed to →
 <xs:attribute name="instanceld" type="xs:string"/>
 <!-An ID value (unique value) of an instance to be subscribed to is input. →
 <xs:attribute name="feederld" type="xs:unsignedShort"/>
 <!- A unique ID of a feeder in an instance to be subscribed to is input. →
 <xs:attribute name="miniVersion" type="xs:string"/>
 <!- A minimum value of a supporting version of an instance to be
 subscribed to is input. →
 <xs:attribute name="maxVersion" type="xs:string"/>
 <!- A maximum value of a supporting version of an instance to be
 subscribed to is input. →
 </xs:complexType> </xs:element>
 </xs:sequence>
``` |

2. A feeder may be an interface through an instance exposes information to another instance. A value may be immediately transmitted or a value may be transmitted as an input value of another instance in an operation of the other instance, according to setting of an interface which is subscribed to. In this case, a message queue may be generated on an instance manager according to an individual feeder ID, and data (messages) are stored in the message queue and the stored data are read through a subscriber interface.
In connection with a method of transmitting a message of a feeder, a method of reading a message from the feeder may be classified as a method according to whether to set a trigger on a subscriber interface or a method of being transmitted as an input value according to execution of an instance which is subscribed to.
In case of a subscriber interface which sets a trigger to the corresponding feeder, when a value for a feeder to which the corresponding subscriber interface subscribes is registered, the registered value may be called. Otherwise, upon executing another instance in which an instance manager subscribes to the corresponding feeder, data are read and the read data are transmitted as an input value. In this case, although the instance manager reads a value of the corresponding feeder, data are not immediately deleted from a message queue. A size of a queue of a corresponding message may have the predetermined number of messages (e.g., 100 messages) according to each interface. Although a corresponding instance is abnormally ended, a corresponding value remains.
A feeder may use attributes expressed in Table 4 below. When a 'representative' indicating a representative value is used (true), units, such as temperature and Kcal, which interact with corresponding data may be displayed on a list page of an instance manager only when units are specified.

**[Table 4]**

| |
|---|
| ```
 <xs:attribute name="id" type="xs:unsignedShort" />
 <!- It may be used as an identifier for identifying an interface (I/F) according
 to each interface. A digit may be used to a maximum of a three-digit
 number. →
 <xs:attribute name="name" type="xs:string" />
 <!-NAME may be used as information for easily classifying I/Fs, and may
 be used as information provided to users to classify I/Fs of a corresponding
 instance upon connection between instances later. →
 <xs:attribute name="unit" type="xs:string" />
 <!- It is used to define a data value transmitted and received through a
 corresponding interface. →
 <xs:attribute name="representative" type="xs:boolean" />
 <!- When a corresponding value is set to a portion for setting a
 representative value, the corresponding value is output to an instance icon
 on an instance list page. →
``` |

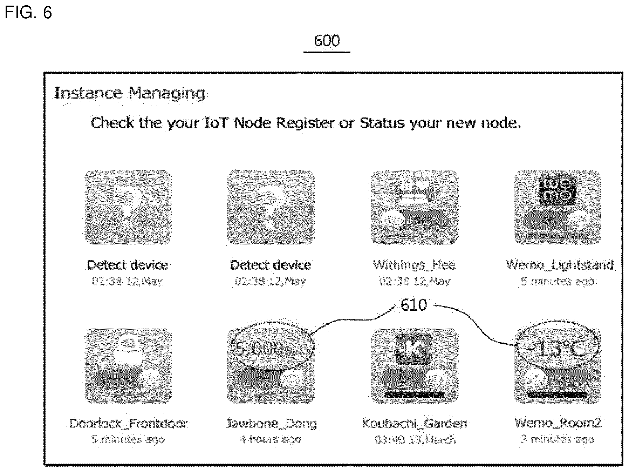

FIG. 6 is a drawing illustrating an instance list page according to an exemplary embodiment of the inventive concept. FIG. 6 illustrates a screen 600 on which a part of a page including a plurality of instance icons is displayed. In this case, in the screen 600, examples in which a representative value attribute of a feeder instance is set to instance icons may be displayed through dotted ovals 610.
3. A receiver may be an interface in which a message is called from another instance, and may receive information through a controller interface of the other instance. A message transmitted from the other instance may be directly transmitted to an instance. Triggering (execution) of a corresponding instance may occur. This triggering may be performed irrespective of setting of 'runningPeriod' indicating a running period of the instance which receives the message.
A receiver may use attributes indicated in Table 5 below. When a 'representative' indicating a representative value is used (true), a button for controlling a corresponding instance may be generated on a list page of an instance manager only when units are specified.

**[Table 5]**

| |
|---|
| ```
 <xs:attribute name="id" type="xs:unsignedShort" />
 <!- It may be used as an identifier for identifying an interface (I/F) according
 to each interface. A digit may be used to a maximum of a three-digit
 number. →
 <xs:attribute name="name" type="xs:string" />
 <!-NAME may be used as information for easily classifying I/Fs, and may
 be used as information provided to users to classify I/Fs of a corresponding
 instance upon connection between instances later. →
 <xs:attribute name="unit" type="xs:string" />
 <!- It is used to define a data value transmitted and received through a
 corresponding interface. →
 <xs:attribute name="representative" type="xs:boolean" />
 <!- When a corresponding value is set to a portion for setting a
 representative value, the corresponding value is output to an instance icon
 on an instance list page. →
``` |

Turning to FIG. 6, FIG. 6 illustrates that buttons, such as "ON", "OFF", and "Locked", for controlling an instance corresponding to an instance icon are generated on icons activated among icons displayed on the screen 600.
4. A controller may include an interface through which an instance transmits a message to another instance or a device (thing). The controller may call a corresponding instance through a direct transmission method to transmit a message to another instance. The message may be transmitted to a corresponding instance through a receiver interface. For example, transmission of a message may be triggered irrespective of setting of 'runningPeriod' of an instance which receives the message. When a message is transmitted to a device (thing), the controller may immediately transmit the message through a network adaptor.
When a message is transmitted to another instance, information of a receiver interface of the other instance needs to be described in a filter element. In this case, the information described in the filter element may be expressed in Table 6 below.

**[Table 6]**

| |
|---|
| ```
 <xs:element name="filter"> <xs:complexType>
 <!- When a message is transmitted to a receiver of another instance, the
 message may be transmitted to only an interface suitable for a condition
 defined in a filter. →
 <xs:attribute name="instanceld" type="xs:string"/>
 <!-An ID value (unique value) of an instance to transmit a message →
 <xs:attribute name="receiverld" type="xs:unsignedShort"/>
 <!- A ID value (unique value) of a receiver interface in an instance to
 transmit a message →
 <xs:attribute name="miniVersion" type="xs:string"/>
 <!- A minimum value of a supporting version of an instance to transmit a
 message is input. →
 <xs:attribute name="maxVersion" type="xs:string"/>
 <!- A maximum value of a supporting version of an instance to transmit a
 message is input. →
 </xs:complexType> </xs:element>
``` |

Also, the controller may have attributes in Table 7 below.

**[Table 7]**

| |
|---|
| ```
 <xs:attribute name="id" type="xs:unsignedShort" />
 <!- It may be used as an identifier for identifying an interface (I/F) according
 to each interface. A digit may be used to a maximum of a three-digit
 number. →
 <xs:attribute name="name" type="xs:string" />
 <!-NAME may be used as information for easily classifying IFs, and may be
 used as information provided to users to classify I/Fs of a corresponding
 instance upon connection between instances later. →
 <xs:complexType> </xs:element>
``` |

5. An open standard for authorization (OAuth) interface may include an interface used when an instance interacts with an external 3^{rd} party service through OAuth-based authentication. For this, a user needs to first perform OAuth account authentication of a service to which he or she want to connect. This OAuth account authentication may be separately performed through an instance wizard or an OAuth menu.

Authentication information of OAuth for linkage may be set or setting of the authentication information may be cancelled, according to individual instances. For example, a plurality of SNS accounts may be differently set or cancelled according to each instance.

An instance may determine whether it is essential to perform corresponding OAuth linkage according to necessity of OAuth. Corresponding information may be indicated through a 'required' attribute. When the 'required' attribute is set to 'true', if OAuth linkage is not normally performed, a corresponding instance may not be in a running state. After registration, an instance remains in an error state.

The OAuth interface may have attributes in Table 8 below.

**[Table 8]**

| |
|---|
| ```
 <xs:element name="oAuth"> <"xs:complexType>
 <!- It may be used as an identifier for identifying an interface (I/F) according
 to each interface. A digit may be used to a maximum of a three-digit
 number. →
 <xs:attribute name="id" type="xs:unsignedShort" />
 <!- A name of a service to perform OAuth linkage is described. For
 example, Twitter is input like 'twitter', Facebook is input like 'facebook', and
 Google is input like 'Google'. →
 <xs:attribute name="serviceName" type="xs:string" />
 <!- A description for informing users about information to be used in an
 OAuth account to perform linkage is given. For example, information about
 whether to access any information for any purpose is described. →
 <xs:attribute name="description" type="xs:boolean" />
 <xs:complexType> </xs:element>
``` |

Hereinafter, a description will be given of a data type of an instance supported by a system for instance hosting. A data type of an instance may be used to indicate a unit display sign displayed on an instance icon in addition to clarity of processing according to a data type when a message is transmitted between instances.

A data type of an instance may refer to a data type of unit information provided according to interfaces of the instance. The system for instance hosting may provide a basic data type (e.g., a world wide web consortium (W3C) web interface definition language (WebIDL) standard) to provide ease of development and to use user intuitive information, and may separately provide a data set frequently used when general loT devices are used. For example, a data type may be provided in Table 9 below.

**[Table 9]**

| Data Type | Description | Icon Display |
|---|---|---|
| percent | Percentage | % |
| onoff | On/off | Control Icon |
| celsius | Celsius | °C |
| lockunlock | Lock/unlock | Control Icon |
| lux | Practical unit of illuminance | Lux |
| kcal | A unit of calorie | Kcal |
| Cal | A unit of calorie | Cal |
| steps | step | Steps |
| floor | floor | F |
| kilogram | A unit of mass | KG |
| gram | A unit of mass | G |
| hour | A unit of time | H |
| minute | A unit of time | min |

In addition to examples of Table 9, various data types, such as millimeter (mm), for indicating rainfall and the like may be used.

In instance hosting, when a virtual object of a thing and business logic is generated, a schema structure for collecting essential information may be proposed. Important structures may include an instance information recording portion, a description portion of network adaptor information for interacting with a virtual object when a thing is generated as the virtual object, a description portion of interface information defined according to instances, and a JavaScript (JS) code description portion. Contents of the structures may be provided in Table 10 below.

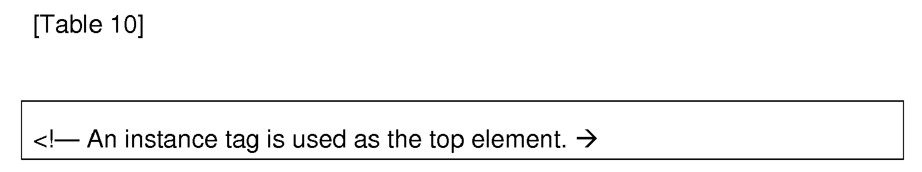

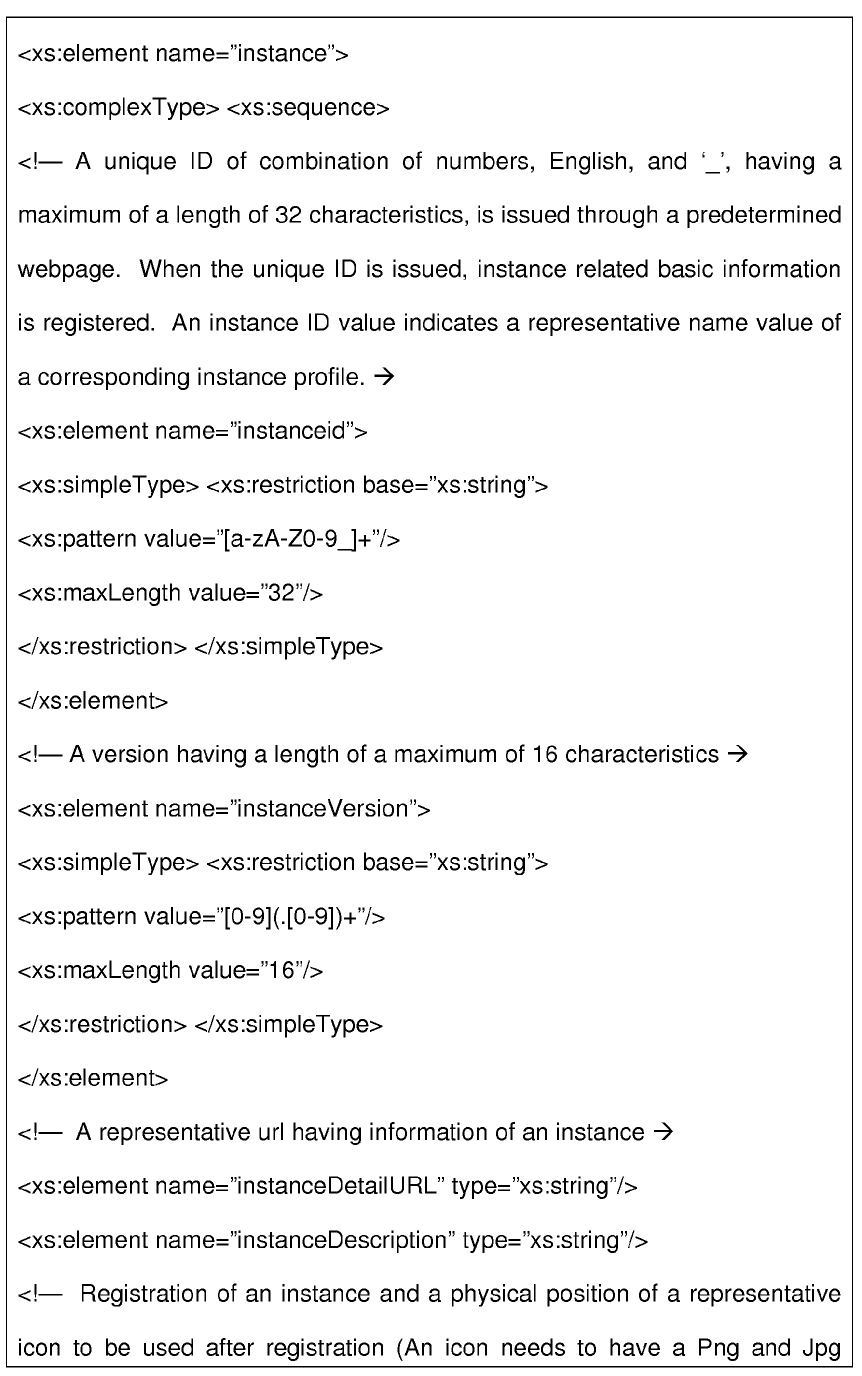

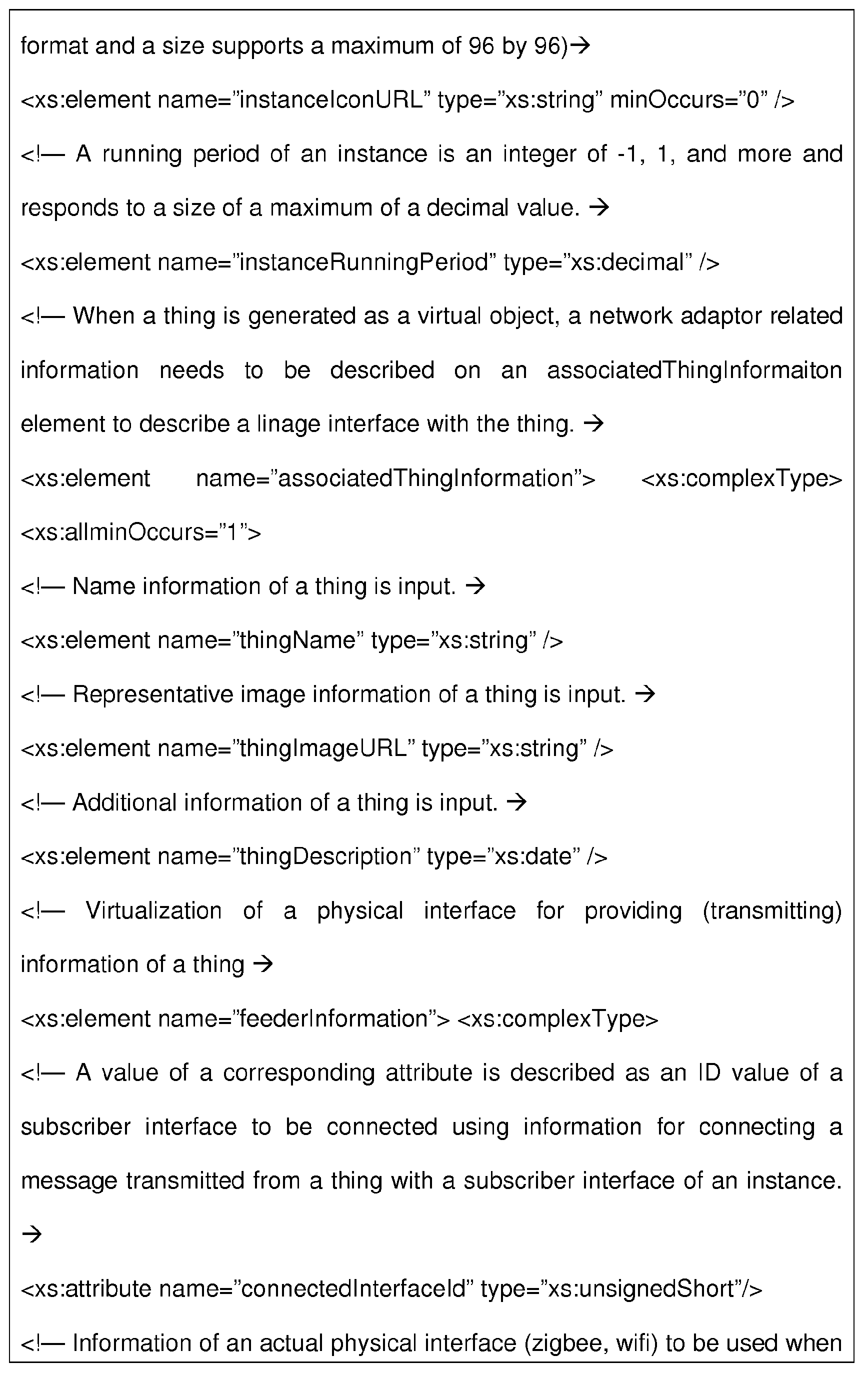

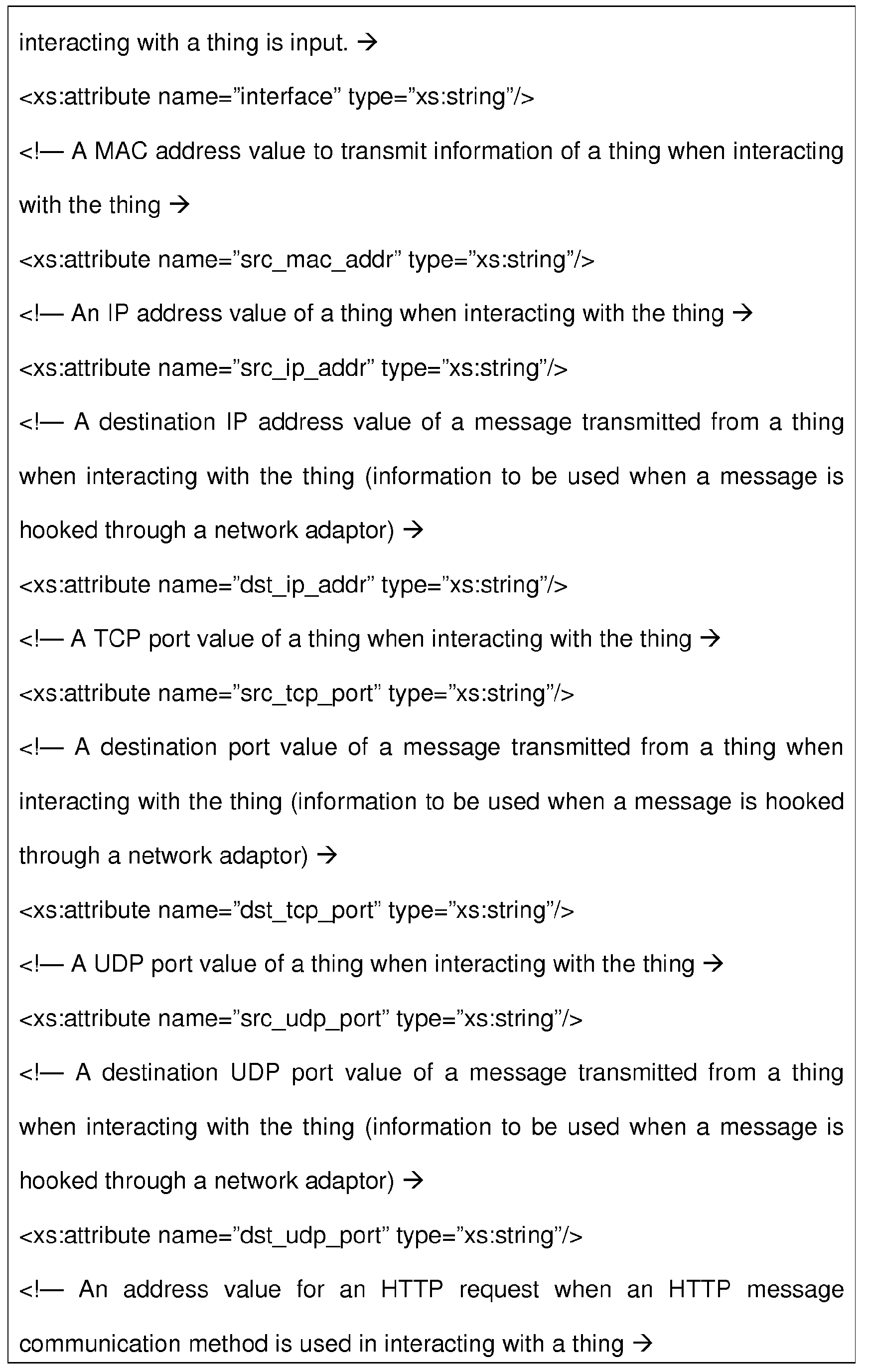

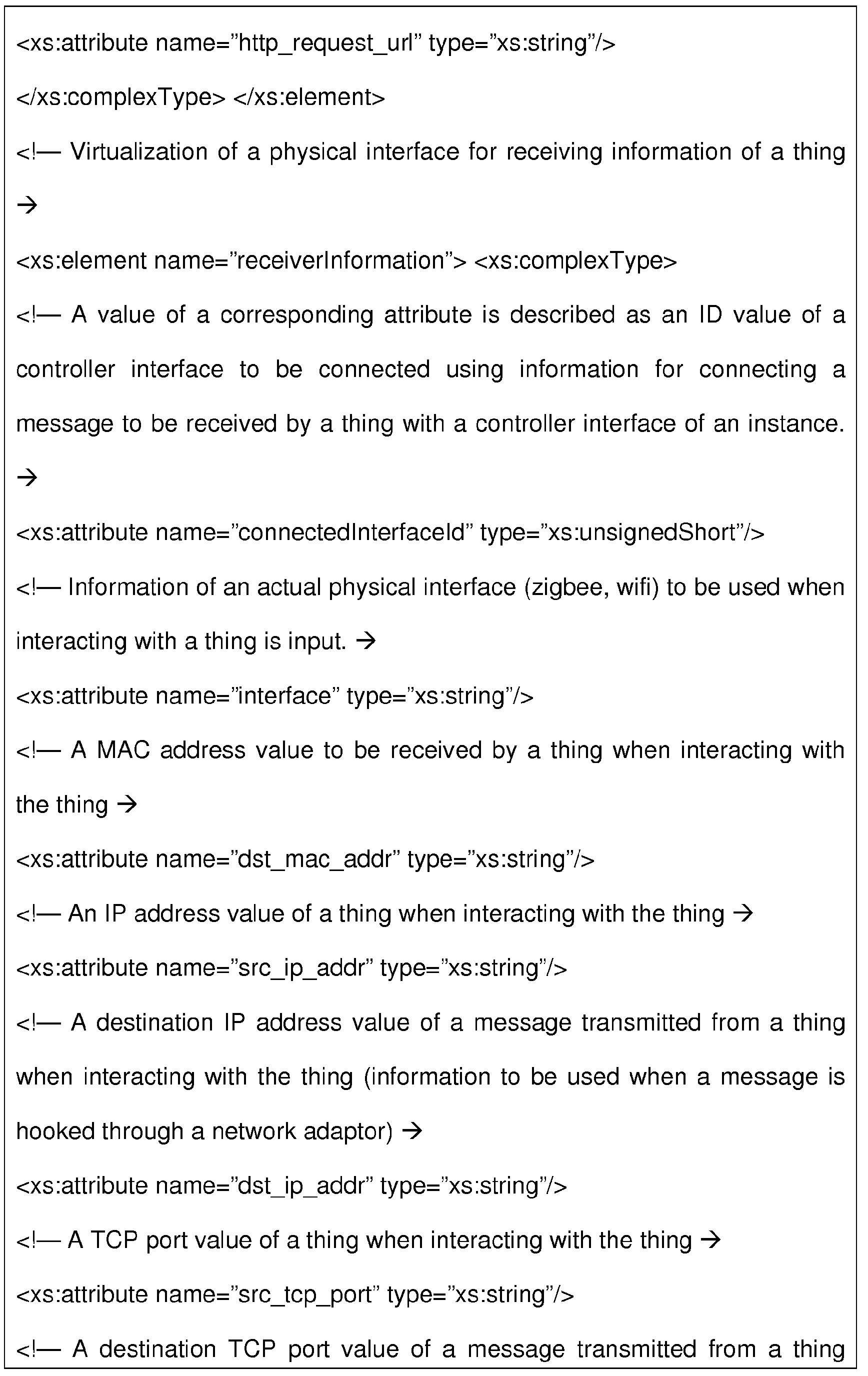

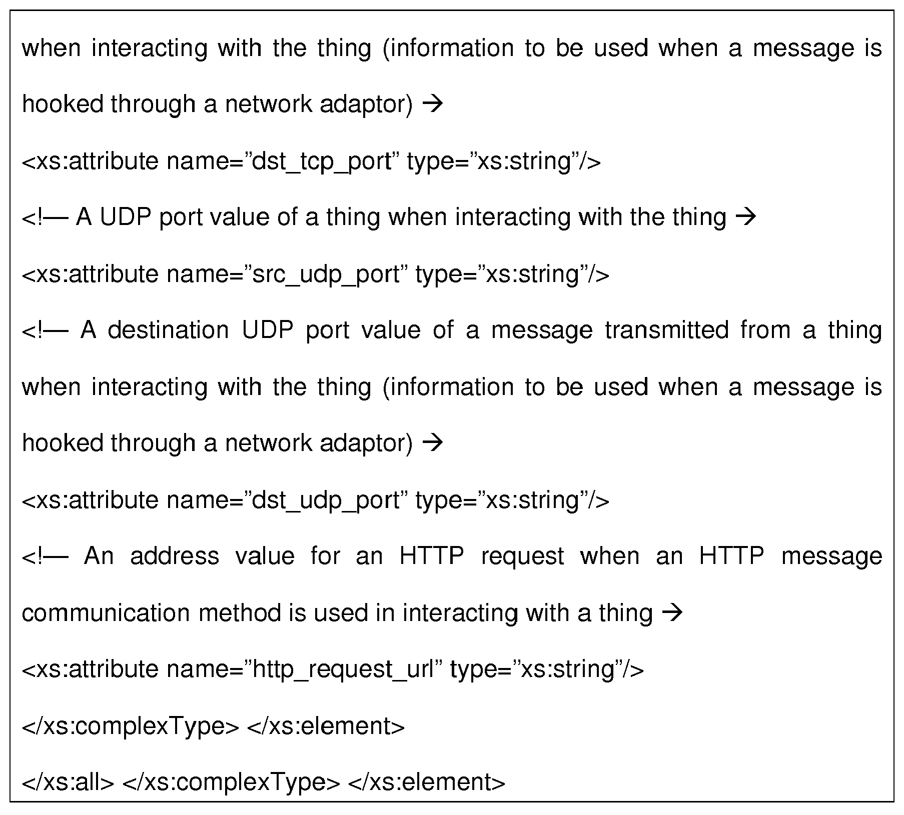

The above-described instance manager may use, for example, a V8-based Java script engine as a running environment for providing a running environment of a virtualization object.

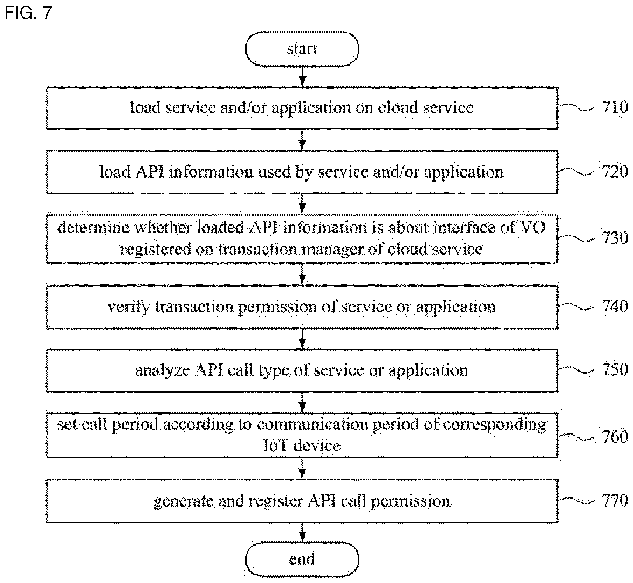

FIG. 7 is a flowchart illustrating a process of installing a service and/or application according to an exemplary embodiment of the inventive concept. A process of deploying a service and/or application according to an exemplary embodiment of the inventive concept may be performed by a cloud-based VO transaction manager included in a service system. Herein, the service system may correspond to an instance hosting platform 340 described in FIG. 3.

In step 710, the VO transaction manager may load a service and/or application on a cloud service. For example, the VO transaction manager may load a process for at least one of a service or an application on the cloud service.

In step 720, the VO transaction manager may load API information used by the service and/or application. For example, the VO transaction manager may match an API information list used in the corresponding cloud service with API information (e.g., a uniform resource locator (URL), a function name, and the like) to be called and may search for and load API information used by the service and/or application. The VO transaction manager may also search for and load API information when the corresponding service or application calls another service or application deployed in the cloud service.

In step 730, the VO transaction manager may determine whether the loaded API information is about an interface of a VO registered on a transaction manager of the cloud service. For example, when a VO of an loT device is generated, the VO transaction manager may register an interface provided from the VO as an API format. Therefore, when the service and/or application is loaded, the VO transaction manager may determine whether the service may be provided by determining whether API information used by the service and/or application is about an interface of a registered VO.

In step 740, the VO transaction manager may verify transaction permission of the service or application. An API call causes cost per the number of times (e.g., billing according to the use of a service). The VO transaction manager may obtain permission information of a basic transaction by verifying authority assigned to a service or application to be called.

In step 750, the VO transaction manager may analyze an API call type of the service or application.

In step 760, the VO transaction manager may set a call period according to a communication period of a corresponding loT device. In this case, the VO transaction manager may set a call period to have a minimum data communication period. When there are a plurality of services and applications, the VO transaction manager may calculate the minimum number of times necessary for calling an external service using a method such as DNF and set a call period.

When the API call type is a non-periodic type, the VO transaction manager may register individual transaction information. For example, in case of a callback-based method, the VO transaction manager may register separate transaction information.

In step 770, the VO transaction manager may register and generate API call permission. For example, the VO transaction manager may register and generate API call permission to a process for at least one of a service or an application on a cloud service.

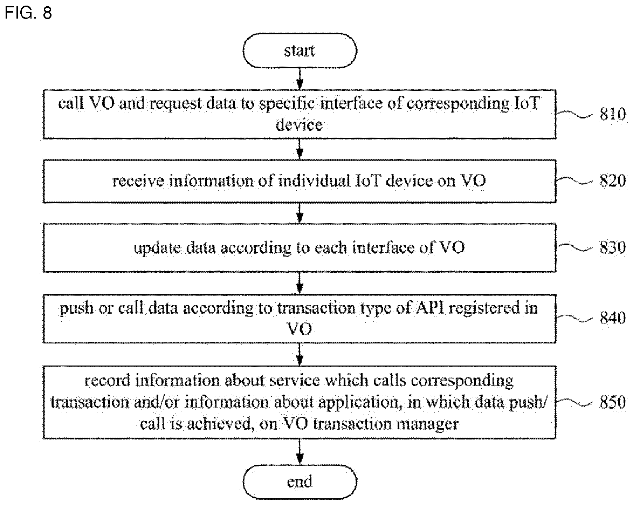

FIG. 8 is a flowchart illustrating a communication process according to an exemplary embodiment of the inventive concept.

In step 810, a VO transaction manager may call a VO and may request data to a specific interface of a corresponding loT device. For example, the VO transaction manager may call a corresponding VO or may request data to the specific interface of the corresponding loT device, when a specific service and/or application requests specific data to the VO transaction manager or according to a set call period.

In step 820, the VO transaction manager may receive information of an individual loT device on a VO.

In step 830, the VO transaction manager may update data according to each interface of a VO.

In step 840, the VO transaction manager may push or call data according to a transaction type of an API registered in a VO. For example, the VO transaction manager may push or call data to a process which call a transaction according to a request of a process for at least one of a service or an application on a cloud service.

In step 850, the VO transaction manager may record information about a service which calls a corresponding transaction on the VO transaction manager and/or information about an application in which a data push/call is achieved. For example, the VO transaction manager may records information about a service or application corresponding to a process in which a push or call is achieved.

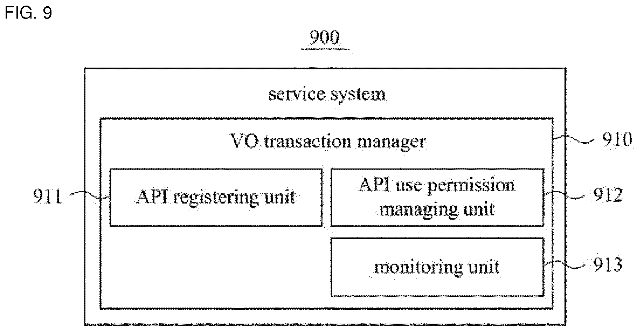

FIG. 9 is a block diagram illustrating a configuration of a service system according to an exemplary embodiment of the inventive concept. A service system 900 according to an exemplary embodiment of the inventive concept may correspond to an instance hosting platform 340 described in FIG. 3. As described above, the service system 900 may include a VO transaction manager 910.

The VO transaction manager 910 may include an API registering unit 911, an API use permission managing unit 912, and a monitoring unit 913. Herein, if necessary, the monitoring unit 913 may be selectively include in the VO transaction manager 910.

When a VO of an loT device is generated, the API registering unit 911 may register an interface provided from the VO as an API format. As described above, the interface may include a feeder, a receiver, and the like. For example, when a VO is registered, the API registering unit 911 may register information about a data generation period and a type of an loT device in an loT profile of the VO. Herein, the type may be classified as a periodic type indicating that an loT device periodically generates data or a non-periodic type indicating that the loT device non-periodically generates data.

The API use permission managing unit 912 may manage use permission of an API according to each VO of an loT device registered on a cloud service. In this case, the API use permission managing unit 912 may verify use permission of an API and may provide a registered API, according to a call of a callback type generated through at least one of a service or an application. For this, the API use permission managing unit 912 may manage information about use permission of an API which may be used according to a service and application which call the registered API. Also, the API use permission managing unit 912 may manage information about call permission, information about the number of times of calls, and information about the maximum number of times of calls during a predetermined period (e.g., one minute), according to a registered API.

As described above, a VO may include an individual interface according a type of data generated by an loT device and may include information a transaction period of the individual interface. In this case, the maximum number of times of calls during a predetermined period may be set according to a transaction period (e.g., a communication period of an loT device) of an interface.

The monitoring unit 913 may classify the number of times transactions loT device are generated into the number of times transactions are generated in the loT device and the number of times transactions are generated in a service or application and may monitor the classified number of times the transactions are generated. The number of times the transactions are generated may be used to calculate cost in billing according to the use of a service later.

As such, according to exemplary embodiments of the inventive concept, the service system may provide a more effective service by managing the entire communication information to an loT device in view of a cloud service.

The above-described devices (e.g., the loT device, the instance hosting gateway, the instance hosting platform, and the like) may be realized by hardware elements, software elements and/or combinations thereof. For example, the devices and components illustrated in exemplary embodiments of the inventive concept may be implemented in one or more general-use computers or special-purpose computers, such as a processor, a controller, an arithmetic logic unit (ALU), a digital signal processor, a microcomputer, a field programmable array (FPA), a programmable logic unit (PLU), a microprocessor or any device which may execute instructions and respond. A processing unit may implement an operating system (OS) or one or software applications running on the OS. Further, the processing unit may access, store, manipulate, process and generate data in response to execution of software. It will be understood by those skilled in the art that although a single processing unit may be illustrated for convenience of understanding, the processing unit may include a plurality of processing elements and/or a plurality of types of processing elements. For example, the processing unit may include a plurality of processors or one processor and one controller. Alternatively, the processing unit may have a different processing configuration, such as a parallel processor.

Software may include computer programs, codes, instructions or one or more combinations thereof and may configure a processing unit to operate in a desired manner or independently or collectively control the processing unit. Software and/or data may be permanently or temporarily embodied in any type of machine, components, physical equipment, virtual equipment, computer storage media or units or transmitted signal waves to be interpreted by the processing unit or to provide instructions or data to the processing unit. Software may be dispersed throughout computer systems connected via networks and be stored or executed in a dispersion manner. Software and data may be recorded in one or more computer-readable storage media.

The methods according to the above-described exemplary embodiments of the inventive concept may be recorded in computer-readable media including program instructions to implement various operations embodied by a computer. The media may also include, alone or in combination with the program instructions, data files, data structures, and the like. The program instructions recorded in the media may be designed and configured specially for the exemplary embodiments of the inventive concept or be known and available to those skilled in computer software. Computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Program instructions include both machine code, such as produced by a compiler, and files containing higher level code that may be executed by the computer using an interpreter. The described hardware devices may be configured to act as one or more software modules to perform the operations of the above-described exemplary embodiments of the inventive concept, or vice versa.

While a few exemplary embodiments have been shown and described with reference to the accompanying drawings, it will be apparent to those skilled in the art that various modifications and variations can be made from the foregoing descriptions. For example, adequate effects may be achieved even if the foregoing processes and methods are carried out in different order than described above, and/or the aforementioned elements, such as systems, structures, devices, or circuits, are combined or coupled in different forms and modes than as described above or be substituted or switched with other components or equivalents.

Therefore, other implements, other embodiments, and equivalents to claims are within the scope of the following claims.

## Claims

1. A service system for managing a transaction in an Internet of things, loT, environment, comprising:
a cloud-based virtual object transaction manager (910), comprising a plurality of virtual objects,
wherein the virtual object transaction manager comprises:
an application program interface, API, registering unit (911), configured to register, when a virtual object of an loT device is generated, an interface provided from the virtual object as an API format, the registering including information about a data generation period, and a type of the loT device in an loT profile of the virtual object;
wherein the type is classified as a periodic type indicating that the loT device periodically generates data or a non-periodic type indicating that the loT device non-periodically generates data; and
an API use permission managing unit (912), configured to manage use permission of APIs according to virtual objects of loT devices registered on the cloud service, and to verify use permission of an API and provide the registered API according to a call of a callback type generated through at least one of a service or an application;
wherein the virtual objects of the virtual object transaction manager are configured to analyze API request information of several high-level services and applications and to provide a communication function with loT devices.

2. The service system of claim 1, wherein the API use permission managing unit (912) manages information of use permission of the API which is usable according to a service and application which calls the registered API.

3. The service system of claim 1, wherein the API use permission managing unit (912) manages information about API call permission, the number of times of API calls, and the maximum number of times of API calls during a predetermined time, according to the registered API.

4. The service system of claim 3, wherein the virtual object comprises an individual interface according to a type of data generated by the loT device and includes information about a transaction period of the individual interface, and
wherein the maximum number of times of the calls during the predetermined time is set according to the transaction period of the individual interface.

5. The service system of claim 1, further comprising:
a monitoring unit (913) configured to classify the number of times transactions per the loT device are generated into the number of times transactions are generated in the loT device and the number of times transactions are generated in a service or application and to monitor the classified number of times the transactions are generated.

## Patentansprüche

1. Dienstsystem zum Verwalten einer Transaktion in einer Umgebung des Internet der Dinge (Internet of Things - IoT), wobei das Dienstsystem Folgendes umfasst:
einen cloudbasierten virtuellen Objekttransaktionsmanager (910), der eine Vielzahl von virtuellen Objekten umfasst,
wobei der virtuelle Objekttransaktionsmanager Folgendes umfasst:
eine Anwendungsprogrammschnittstelle (Application Program Interface - API) eine Registrierungseinheit (911), die dafür konfiguriert ist, eine Schnittstelle zu registrieren, die von dem virtuellen Objekt in einem API-Format bereitgestellt wird, wenn ein virtuelles Objekt einer loT-Vorrichtung erzeugt wird, wobei die Registrierung Informationen über eine Datenerzeugungsperiode und einen Typ der IoT-Vorrichtung in einem loT-Profil des virtuellen Objekts umfasst;
wobei der Typ als periodischer Typ klassifiziert wird, der anzeigt, dass die IoT-Vorrichtung periodisch Daten erzeugt, oder als nichtperiodischer Typ klassifiziert wird, der anzeigt, dass die IoT-Vorrichtung nicht periodisch Daten erzeugt; und
eine API-Nutzungsberechtigungsverwaltungseinheit (912), die so konfiguriert ist, dass sie die Nutzungsberechtigung von APIs gemäß virtuellen Objekten von loT-Vorrichtungen, die für den Cloud-Dienst registriert sind, verwaltet und die Nutzungsberechtigung für eine API verifiziert und die registrierte API gemäß einem Aufruf eines Rückruftyps bereitstellt, der durch mindestens einen Dienst oder eine Anwendung erzeugt wird;
wobei die virtuellen Objekte des virtuellen Objekttransaktionsmanagers für Folgendes konfiguriert sind:
Analysieren von API-Anfrageinformationen von mehreren Diensten und Anwendungen hohen Niveaus und
Bereitstellen einer Kommunikationsfunktion mit IoT-Vorrichtungen.

2. Dienstsystem nach Anspruch 1, wobei die API-Nutzungsberechtigungsverwaltungseinheit (912) Informationen zur Nutzungsberechtigung der API verwaltet, die gemäß einem Dienst und einer Anwendung verwendbar ist, die die registrierte API aufruft.

3. Dienstsystem nach Anspruch 1, wobei die API-Nutzungsberechtigungsverwaltungseinheit (912) Informationen über die API-Aufrufberechtigung, die Anzahl von Malen von API-Aufrufen und die maximale Anzahl von Malen von API-Aufrufen während einer vorbestimmten Zeit gemäß der registrierten API verwaltet.

4. Dienstsystem nach Anspruch 3, wobei das virtuelle Objekt eine individuelle Schnittstelle gemäß einem Datentyp umfasst, die durch die IoT-Vorrichtung erzeugt wird und Informationen über eine Transaktionsperiode der individuellen Schnittstelle umfasst,
und
wobei die maximale Anzahl von Malen der Aufrufe während der vorbestimmten Zeit entsprechend der Transaktionsperiode der individuellen Schnittstelle festgelegt wird.

5. Dienstsystem nach Anspruch 1, das ferner Folgendes umfasst:
eine Überwachungseinheit (913), die für Folgendes konfiguriert ist: Zuordnen der Anzahl von Malen, die Transaktionen pro loT-Vorrichtung erzeugt werden, zu der Anzahl von Malen, die Transaktionen in der loT-Vorrichtung erzeugt werden, und der Anzahl von Malen, die Transaktionen in einem Dienst oder einer Anwendung erzeugt werden, und Überwachen der zugeordneten Anzahl von Malen, die die Transaktionen erzeugt werden.

## Revendications

1. Système de service servant à gérer une transaction dans un environnement de type loT (Internet of things - Internet des objets), comportant :
un gestionnaire (910) de transactions d'objets virtuels basées dans le nuage informatique, comportant une pluralité d'objets virtuels,
dans lequel le gestionnaire de transactions d'objets virtuels comporte :
une unité d'enregistrement d'API (application program interface - interface de programme d'application) (911), configurée à des fins d'enregistrement, quand un objet virtuel d'un dispositif de l'IoT est généré, d'une interface fournie en provenance de l'objet virtuel sous la forme d'un format API, l'enregistrement comprenant des informations se rapportant à une période de génération de données, et un type du dispositif de l'IoT dans un profil loT de l'objet virtuel ;
dans lequel le type est classifié comme étant un type périodique indiquant que le dispositif de l'IoT génère des données de manière périodique ou un type non périodique indiquant que le dispositif de l'IoT génère des données de manière non périodique ; et
une unité de gestion des permissions d'utilisation de l'API (912), configurée à des fins de gestion de toute permission d'utilisation des API en fonction des objets virtuels des dispositifs de l'IoT enregistrés sur le service infonuagique, et à des fins de vérification de la permission d'utilisation d'une API et à des fins de fourniture de l'API enregistrée en fonction d'un appel d'un type rappel généré par l'intermédiaire d'au moins l'un parmi un service ou une application ;
dans lequel les objets virtuels du gestionnaire de transactions d'objets virtuels sont configurés à des fins d'analyse des informations de demande d'API de plusieurs services et applications de haut niveau et à des fins de fourniture d'une fonction de communication avec des dispositifs de l'IoT.

2. Système de service selon la revendication 1, dans lequel l'unité de gestion des permissions d'utilisation de l'API (912) gère des informations de permission d'utilisation de l'API qui est en mesure d'être utilisée en fonction d'un service et d'une application appelant l'API enregistrée.

3. Système de service selon la revendication 1, dans lequel l'unité de gestion des permissions d'utilisation de l'API (912) gère des informations concernant la permission d'appel de l'API, le nombre de fois qu'il y a eu appels d'API, et le nombre maximum de fois qu'il y a eu des appels d'API pendant une durée prédéterminée, en fonction de l'API enregistrée.

4. Système de service selon la revendication 3, dans lequel l'objet virtuel comporte une interface individuelle en fonction d'un type de données générées par le dispositif de l'IoT et comprend des informations concernant une période de transaction de l'interface individuelle, et
dans lequel le nombre maximum de fois qu'il y a eu des appels pendant la durée prédéterminée est réglé en fonction de la période de transaction de l'interface individuelle.

5. Système de service selon la revendication 1, comportant par ailleurs :
une unité de contrôle (913) configurée à des fins de classification du nombre de fois que des transactions par dispositif de l'IoT sont générées selon le nombre de fois que des transactions sont générées dans le dispositif de l'IoT et le nombre de fois que des transactions sont générées dans un service ou application et à des fins de contrôle du nombre classifié de fois que des transactions sont générées.
